# EUROPÄISCHE PATENTSCHRIFT

(11) **EP 1 841 982 B1**
(45) Veröffentlichungstag und Bekanntmachung des Hinweises auf die Patenterteilung: **06.04.2011**
(21) Anmeldenummer: 05810970.3
(22) Anmeldetag: 25.11.2005
(51) Int. Cl.: F16F 9/02, F16F 9/34, E05F 5/00

(54) **SCHIEBETÜRSYSTEM**
SLIDING DOOR SYSTEM
SYSTÈME POUR PORTE COULISSANT

(30) Priorität: 26.11.2004 EP 04106110; 28.10.2005 DE 202005017068 U
(43) Veröffentlichungstag der Anmeldung: 10.10.2007
(73) Patentinhaber: Krischke-Lengersdorf, Christian, 82067 Ebenhausen (DE)
(72) Erfinder: EBERSTEIN, Sven, 82515 Wolfratshausen (DE)
(74) Vertreter: Szynka, Dirk
(86) Internationale Anmeldenummer: PCT/EP2005/056242
(87) Internationale Veröffentlichungsnummer: WO 2006/056606

(56) Entgegenhaltungen:
- EP-A- 0 790 381
- EP-A2- 1 426 535
- WO-A-03/079855
- DE-A1- 10 301 121
- DE-U1- 20 121 255
- DE-U1- 20 308 217
- DE-U1- 20 311 795
- DE-U1- 20 315 124
- DE-U1- 20 318 929
- DE-U1- 20 319 598
- DE-U1-202004 018 189
- GB-A- 2 357 311
- JP-A- 1 307 531
- US-A- 1 596 445
- US-A- 3 005 523
- US-A- 3 876 193
- US-A- 4 004 372
- US-A- 4 110 868
- US-A1- 2005 093 213
- PATENT ABSTRACTS OF JAPAN Bd. 014, Nr. 103 (M-0941), 26. Februar 1990 (1990-02-26) -& JP 01 307531 A (FUJI SEIKI CO LTD), 12. Dezember 1989 (1989-12-12)
- PATENT ABSTRACTS OF JAPAN Bd. 1997, Nr. 10, 31. Oktober 1997 (1997-10-31) -& JP 09 165968 A (SHINKANSAI BEARING KK), 24. Juni 1997 (1997-06-24)
- PATENT ABSTRACTS OF JAPAN Bd. 2003, Nr. 12, 5. Dezember 2003 (2003-12-05) -& JP 2004 076432 A (SHINKANSAI BEARING CO LTD), 11. März 2004 (2004-03-11)
- PATENT ABSTRACTS OF JAPAN Bd. 014, Nr. 010 (M-917), 10. Januar 1990 (1990-01-10) -& JP 01 256679 A (KOKUYO CO LTD), 13. Oktober 1989 (1989-10-13)
- PATENT ABSTRACTS OF JAPAN Bd. 2002, Nr. 05, 3. Mai 2002 (2002-05-03) -& JP 2002 005212 A (INFINIX:KK), 9. Januar 2002 (2002-01-09)
- PATENT ABSTRACTS OF JAPAN Bd. 013, Nr. 593 (M-914), 27. Dezember 1989 (1989-12-27) & JP 01 250584 A (KOKUYO CO LTD), 5. Oktober 1989 (1989-10-05)

## Beschreibung

Die vorliegende Erfindung bezieht sich auf ein Schiebetürsystem mit einem Lineardämpfer.

Es ist an sich längst bekannt, Bewegungen mechanisch zu dämpfen, beispielsweise die Ein- und/oder Auszugsbewegungen in einer Möbelschublade zu dämpfen. Damit soll verhindert werden, dass eine Schublade wegen etwas zu heftiger Betätigung übermäßig schnell geöffnet oder geschlossen wird und mit Lärm und Erschütterungen verbunden an einen jeweiligen Endanschlag stößt. Solche Fehlbetätigungen können durch mangelnde Achtsamkeit aber auch durch falsche intuitive Annahmen über den Beladungszustand der Schublade und damit zu große Kräfte bei der Betätigung entstehen.

Auch kann es erwünscht sein, eine schwer beladene Schublade, die wegen der Masseträgheit mit einer gewissen Kraft beschleunigt werden muss, um eine Schließoder Öffnungsbewegung zu beginnen, nicht ungedämpft bzw. ungebremst in die entgegengesetzte Position fahren zu lassen.

Analoge Überlegungen gelten für viele andere Anwendungsfälle, beispielsweise das Öffnen und Schließen von anderen beweglichen Möbelteilen wie Türen oder Klappen, für Fensterflügel oder Zimmer- und Haustüren im Luftzug sowie für Rolläden, insbesondere für Möbel usw.

Die JP 9-165968 zeigt ein Schiebetürsystem mit einem Lineardämpfer, der durch eine Schiebetürschiene gegen Blicke abgedeckt ist. Dort erstreckt sich der Lineardämpfer über die gesamte Bewegungsstrecke eines Schiebetürelements und wirkt dabei parallel zu einer Federeinrichtung mit einem Band- oder Seilzug und einer Spiralfeder.

Die EP 1 426 535 A2 zeigt ein Schiebetürsystem mit einem Schiebetürelement, unterhalb dessen oberer Seitenkante ein Lineardämpfer mit einer Schraubenfeder angeordnet ist, wobei Schraubenfeder und Lineardämpfer nur entlang einem gedämpften Bewegungsabschnitt des Schiebetürelements wirken. Das Schiebetürelement verdeckt die Sicht auf Schiene, Dämpfer und Schraubenfeder, wobei Letztere in der Schiene offen montiert sind.

Die DE 203 15 124 U1 zeigt einen vergleichbaren Stand der Technik, wobei jedoch Dämpfer und Schraubenfeder in einem separaten Gehäuse und außerhalb der Schiene montiert sind.

Die WO 03/079855 A1 zeigt ein Schubladensystem mit einer Ausziehführung, die einen Lineardämpfer aufweist, der zwischen der Schublade und einem diese seitlich umfassenden Korpus des Möbels angeordnet ist.

Die DE 203 08 217 U1 zeigt eine Schiebeführung für einen Apothekerschrank, bei der zwischen einer schieberichtungsparallelen Seitenkante eines Apothekerschrankrahmens und einem Möbelkorpus eine Halteschiene mit zwei Schienenschenkeln vorgesehen ist. Die Schienenschenkel decken dabei bewegliche Führungsschienen ab. Ferner ist weiter unten neben dem Apothekerschrankrahmen ein mit einer Schraubenfeder gemeinsam in einem Gehäuse verbauter Lineardämpfer zum Abdämpfen der Verschiebebewegungen des Apothekerschranks vorgesehen.

Die DE 201 21 255 U1 zeigt einen Lineardämpfer mit paralleler und exzentrischer Schraubenfeder für einen Schwenktürtlügel oder eine Schublade.

Schließlich zeigt die DE 103 01 121 A1 ein Schiebetürsystem nach dem Oberbegriff des Anspruchs 1. Dort sind zwei Schraubenfedern jeweils in einen Lineardämpfer integriert und dabei konzentrisch und parallel zu diesem angeordnet.

Der vorliegenden Erfindung liegt davon ausgehend das technische Problem zugrunde, ein verbessertes Schiebetürsystem mit mechanischem Dämpfer und paralleler Federeinrichtung anzugeben, das einfach und kompakt aufgebaut und effizient eingesetzt werden kann.

Gelöst wird dieses Problem durch die kennzeichnenden Merkmale des Anspruchs 1, nämlich dadurch, dass die Schraubenfeder (40) zur leichteren baulichen Zugänglichkeit extern und zu dem Dämpfer (20) exzentrisch angeordnete ist.

Im Übrigen sind bevorzugte Ausgestaltungen der Erfindung in den abhängigen Ansprüchen angegeben.

Die Erfindung bezieht sich, wie gesagt, auf Schiebetürsysteme, also Türsysteme, bei denen das Türelement oder Türblatt translatorisch verschoben wird, um die Türöffnung zu verschließen oder freizugeben. Schiebetürsysteme finden Anwendung im Möbelbau, bei Zimmer- oder Haustüren, bei Raumteilern, auch zur Abgrenzung von begehbaren Schränken, aber auch bei größeren Hallentoren, Garagentoren u. Ä. Je nach Anwendung sind die zu bewegenden Schiebetürelemente unterschiedlich schwer.

Es ist vorteilhaft, Teile der Schiebebewegung eines Schiebetürelements durch einen Dämpfer abzudämpfen. Dies betrifft insbesondere die Schiebetürbewegung in der Umgebung der Grenzen der Bewegungsstrecke, d. h. der Anschläge. Hier soll vermieden werden, dass Schiebetürelemente, vor allem schwere Schiebetürelemente, in Folge ihrer Bewegung per Hand oder auch durch einen technischen Antrieb und ihrer dadurch vorhandenen kinetischen Energie anschlagen oder zu stark abgebremst werden. Ein ungedämpftes Anschlagen kann zu unangenehmen Geräuschen und auch mechanischen Belastungen führen, wohingegen eine gedämpfte Bewegung geräuschärmer und mechanisch schonender erfolgen kann und bei dem Benutzer den Eindruck einer hochwertigeren Ausführung hervorruft.

Schiebetürsysteme unterliegen in vielen Fällen auch Ansprüchen an die ästhetische Gestaltung, die mit zu berücksichtigen sind.

Die Grundidee der Erfindung besteht darin, dass bei den allermeisten gängigen Schiebetürsystemen ohnehin Schienen vorgesehen sind, die das Schiebetürelement nicht nur halten, sondern auch mit einem Schienenschenkel zumindest einen Raum oberhalb der entsprechenden Seitenkante des Schiebetürelements umfassen und abdecken. Hierbei ist die Blickrichtung auf das Schiebetürelement, also senkrecht in Bezug auf seine flächige Erstreckung, gemeint. "Halten" bedeutet hier nicht notwendigerweise, dass die Schiene das gesamte Gewicht oder überhaupt nur das Gewicht des Schiebetürelements trägt, sondern bezieht sich auch auf solche Fälle, in denen die Schiene beispielsweise nur gegen ungewünschte seitliche Bewegungen, also gewissermaßen in der erwähnten Blickrichtung, vorgesehen ist und insoweit das Schiebetürelement in der Bahn hält.

Die Schiene kann mit ihrem Schenkel die Seitenkante selbst umfassen und abdecken oder auch, in horizontaler Blickrichtung gesehen, im Wesentlichen an die Seitenkante anschließen. Dann deckt sie einen Raum oberhalb der Seitenkante ab, der für Montagelement u. Ä. Verwendung findet und daher vor Blicken geschützt werden soll. Natürlich kann es dabei einen kleinen Schlitz geben, so dass der Begriff des Abdeckens nur im Sinne eines im Wesentlichen Abdecken zu verstehen ist.

Wenn nun diese Schiene auch dazu ausgenutzt wird, den Dämpfer selbst abzudecken, indem der Dämpfer innerhalb der Schiene angeordnet wird, so sind die sonst am Markt zu beobachtenden Verschlechterungen des äußeren Erscheinungsbildes durch Dämpferkonstruktionen vermeidbar. Dazu muss die Schiene allenfalls etwas größere Abmessungen aufweisen als sonst notwendig. Im Rahmen der Erfindung werden schlanke Bauformen des Dämpfers verwendet, nämlich Linearzylinder, die i. d. R. ohne weiteres auch in bestehenden Standardschienensystemen verbaut werden können. Der dem Anmelder bekannte Stand der Technik sieht allerdings außerhalb der Schiene montierte und damit im Regelfall sichtbare Dämpfer vor. Zusätzlich entsteht bei diesen regelmäßig die Notwendigkeit von Schlitzen in der Schiene, durch die mechanische Bauteile zur Kopplung des Dämpfers an bewegte Teile innerhalb der Schiene geführt sind.

Demgegenüber kann bei der Erfindung der Dämpfer in einer durch die Schiene selbst allenfalls im Sinne des zur Verfügung stehenden Volumens (bzw. der Baubreite und -höhe) beschränkten Weise montiert und mit der Schiene und dem Schiebetürelement verbunden werden. Wenn gewünscht, können aufwändige Gehäusekonstruktionen, die in anderen Fällen schon aus ästhetischen Gründen, wegen des sonst nicht gegebenen Berührschutzes oder aus anderen Gründen erforderlich sein können, weggelassen werden.

Bevorzugt ist der Dämpfer zwischen der Schiene und dem Schiebetürelement montiert. Dies ist allerdings nicht unbedingt notwendig. Denkt man sich beispielsweise ein umgekehrtes L-Profil, das mit einem Schenkel horizontal an einer Zimmerdecke montiert ist und mit dem anderen vertikalen Schenkel in der beschriebenen Weise zumindest den Raum über der Seitenkante abdeckt, und denkt man sich ferner dieses L-Profil vor einer Wand, also in einer Ecke, montiert, so könnte der Dämpfer auch durchaus zwischen dem Schiebetürelement und der Zimmerwand angebracht sein. Erfindungsgemäß bevorzugt sind jedoch Lösungen, die unabhängig von solchen Montagesituationen für eine Sichtabdeckung sorgen und damit den Dämpfer zwischen Schiene und Schiebetürelement vorsehen. In Betracht kommen bei der beschriebenen L-Profilform damit der Zwischenraum zwischen dem horizontalen Schenkel des "L" und dem Schiebetürelement, also gewissermaßen eine Montage des Dämpfers "über" dem Schiebetürelement, und der Zwischenraum zwischen dem vertikalen Schenkel der Schiene und dem Schiebetürelement, also gewissermaßen eine Montage "vor" dem Schiebetürelement. Bevorzugt ist, auch bei anderen Profilformen, eine Montage "über" dem Schiebetürelement, also zwischen einem horizontalen Schenkel der Schiene bzw. ihrer oberen Wand, und dem Schiebetürelement. Bevorzugt sind ferner Schienen in einer umgekehrten U-Form, die also gegenüber der beschriebenen L-Form einen weiteren vertikalen Schenkel aufweisen.

Die Schiene kann Lager zur Lagerung des Schiebetürelements in der verschiebbaren Weise in der Schiene aufweisen, etwa Systeme mit Führungsrollen und Laufflächen für diese. Dies gilt sowohl für den bereits erwähnten Fall, dass das Halten durch die Schiene lediglich einem seitlichen Führen in einer Bahn entspricht, als auch für den Fall einer Abstützung eines Teils des oder des gesamten Gewichts des Schiebetür elements.

Erfindungsgemäß ist der Dämpfer bei einer oberen Schiene angebracht, wenngleich Schiebetürsysteme meistens zusätzlich auch untere Schienen im Bodenbereich aufweisen. Bei den unteren Schienen sind eine minimale Baugröße und daher häufig kein zusätzlicher mechanischer Aufwand gewünscht. Ferner sind sie selbst dann Blicken von oben besonders gut zugänglich, wenn eine Sichtabdeckung in der (horizontalen) Richtung senkrecht zur Schiebetürelementebene besteht.

Bevorzugt ist im Rahmen der Erfindung schließlich eine Anwendung im Bereich von Schiebetürsystemen mit besonders schweren Schiebetürelementen, wie sie bei Raumteilern, Abteilungen von begehbaren Schränken, Toren und Zimmer- und Haustüren auftreten, also außerhalb der eigentlichen Möbel. Sie richtet sich demnach bevorzugt auf Schiebetürsysteme, die an Zimmer- oder Hauswänden montiert sind.

Die Erfindung sieht vorzugsweise einen pneumatischen Dämpfer vor, der demzufolge über mindestens eine pneumatische Kammer verfügt. Die zu dämpfende Bewegung soll dabei in einer Relativbewegung zwischen einer beweglichen Wand der pneumatischen Kammer und dem übrigen Dämpfer, also relativ zu dem "Ruhesystem" des Dämpfers, umgesetzt werden, wobei natürlich das bewegte Vorrichtungsteil mit dem Dämpfer oder mit der Wand gekoppelt sein kann.

In einer der Wände der pneumatischen Kammer ist eine Drosselöffnung zur Drosselung einer Gasbewegung in die oder aus der Kammer angebracht. Diese Drosselöffnung ist erfindungsgemäß in einer Ventileinrichtung vorgesehen, welche so ausgelegt ist, dass die Drosselöffnung abhängig von dem zwischen den beiden Seiten der Ventileinrichtung (also innerhalb der Kammer an der Ventileinrichtung und außerhalb der Kammer in der Ventileinrichtung) herrschenden Druck verändert wird. Dabei soll ein elastisch aufgehängtes Ventilteil die Drosselöffnung zumindest teilweise begrenzen und der erwähnte Druckunterschied zusammenwirkend mit der elastischen Aufhängung für eine entsprechende Auslenkung des Ventilteils und daraus resultierende Vergrößerung oder Verkleinerung der effektiven Drosselöffnungsfläche sorgen.

Wenn man sich zur Veranschaulichung, eine schnelle Öffnungs- oder Schließbewegung einer Schiebetür vorstellt, so wird diese auf eine Relativbewegung zwischen dem Dämpfer und der beweglichen Wand der pneumatischen Kammer übertragen und führt zu einer entsprechenden Druckdifferenz über die Ventileinrichtung. Dabei kann in der pneumatischen Kammer ein Unterdruck oder auch ein Überdruck erzeugt werden. Dieser erzeugte Druck soll zumindest zu einem wesentlichen Teil durch die Ventileinrichtung ausgeglichen werden, die pneumatische Kammer soll also im Übrigen näherungsweise dicht sein, wobei gewisse Restundichtigkeiten, wie im Folgenden noch erläutert, durchaus auch erwünscht sein können.

Eine schnelle Bewegung erzeugt nach einer gewissen Bewegungsstrecke eine relativ große Druckveränderung und damit eine große Druckdifferenz, erfindungsgemäß also eine vergrößerte Drosselöffnungsfläche. Der Strömungswiderstand gegenüber dem durch die Drosselöffnung strömenden Gas sinkt somit. Mit der Erfindung kann also erreicht werden, dass der Dämpfer sich heftigen Bewegungen weniger im Sinne einer Quasi-Blockade widersetzt, als dies von konventionellen Dämpfern bekannt ist. Andererseits ist die Drosselöffnungsfläche bei kleineren Druckdifferenzen, etwa sehr sachten Bewegungen, entsprechend kleiner, so dass auch solche Bewegungen noch in einem gewissen Umfang gedämpft werden.

Es kann sogar vorgesehen sein, dass sich die Ventileinrichtung erst ab einer gewissen Druckdifferenz öffnet, so dass eine gewisse Mindestdämpfungskraft gewährleistet bleibt. Andererseits können beabsichtigte Undichtigkeiten der pneumatischen Kammer dazu führen, dass sehr sanfte Bewegungen infolge einer Gasströmung durch die Undichtigkeit ganz leicht und fast ungedämpft ablaufen, was ebenfalls erwünscht sein kann. Diese Undichtigkeiten können sowohl in der Konstruktion der Ventileinrichtung als auch an anderer Stelle, etwa bei der Abdichtung der beweglichen Wand, vorliegen.

Näherungsweise kann ein relativ großer Anstieg der Drosselöffnungsfläche bei steigendem Druckunterschied zu einem regelventilähnüchen Verhalten führen, also zu einer näherungsweisen Beibehaltung eines bestimmten Druckunterschieds und damit einer bestimmten Dämpfungskraft.

Der erfindungsgemäße Dämpfer ist mit einer Schraubenfeder als externe Rückstellvorrichtung kombiniert.

Der pneumatische Dämpfer kann darüber hinaus auch pneumatische Funktionen als Antrieb ausführen, was jedoch nicht bevorzugt ist. Die Erfindung bezieht sich vielmehr vor allem auf rein passive Dämpfer.

Bei einer bevorzugten Ausgestaltung soll der erfindungsgemäße Dämpfer mit Umgebungsluft arbeiten, also kein gesondert vorgesehenes Pneumatikgas enthalten. Insbesondere kann die Pneumatikkammer auch über die Ventileinrichtung direkt mit der Umgebung kommunizieren.

Die Ventileinrichtung verfügt über eine elastische Aufhängung des Ventilteils, beispielsweise eines die Drosselöffnung im nicht ausgelehnten Zustand fast oder ganz verschließenden Stöpsels. Die elastische Aufhängung kann in konventioneller Weise in Form von Metallfedern, etwa Schraubenfedern, vorgesehen sein. Bevorzugt ist jedoch eine elastische Aufhängung durch ein Elastomer, wobei besonders bevorzugt ist, dass das aufgehängte Ventilteil und die elastische Aufhängung einstückig aus Elastomer gebildet sind. Beispielsweise kann das Ventilteil ein im Wesentlichen zylindrischer Stöpsel, auch mit konischer Ventilfläche, sein, der an seitlichen Stegen aus dem gleichen Elastomermaterial aufgehängt ist. Diese Stege können in verschiedener Form außerhalb gehalten sein, beispielsweise in entsprechenden Aufnahmen eingeklemmt sein. Besonders bevorzugt ist allerdings, dass auch eine an die Stege anschließende und das Ventilteil und die Stege geschlossen umgebende Halterung einstückig mit Ventilteil und Stegen oder anderweitiger Aufhängung ausgebildet ist. "Geschlossen" meint hierbei natürlich nicht die Richtungen, in denen die Ventileinrichtung gasdurchlässig sein muss, sondern bedeutet, dass die Halterung einen zu den im Verhältnis dazu seitlichen Richtungen im Wesentlichen geschlossenen Rahmen bildet. Insbesondere kann die Halterung in dieser einstückigen Form als elastischer Stöpsel in dem Dämpfer gehalten, etwa eingeklemmt und optional auch verrastet sein. Eine Veranschaulichung bietet das Ausführungsbeispiel.

Um Missverständnisse zu vermeiden, ist darauf hinzuweisen, dass die einstückige Ausbildung nicht notwendigerweise die gesamte Ventileinrichtung betrifft, also beispielsweise in dem Ausführungsbeispiel zwar die Halterung, die elastische Aufhängung und zwei Ventilteile einstückig aus Elastomer gebildet sind, jedoch nicht die von den Ventilteilen und deren konischen Ventilflächen zu verschließenden Öffnungen und die Wand, in denen sich diese befinden. Diese können vielmehr einstückig mit einem anderen Teil des Dämpfers ausgebildet sein.

Bei dem Dämpfer handelt es sich um einen Linearzylinder, in dem die bewegliche Wand durch einen Zylinderkolben gebildet ist, was auch im Ausführungsbeispiel dargestellt ist. Die Ventileinrichtung kann dabei vorzugsweise in einer dem Zylinderkolben gegenüberliegenden Wand vorgesehen sein. Im Vergleich zum Ausführungsbeispiel ist darauf hinzuweisen, dass diese Wand auch die Wand sein kann, durch die die Kolbenstange läuft. Im Übrigen könnte die Ventileinrichtung auch durchaus in dem Kolben selbst ausgebildet sein und zwischen zwei von dem Kolben und der Ventileinrichtung getrennten Pneumatikkammern vorliegen.

Die erwähnten Elastomerteile, ob es sich dabei um die Aufhängung alleine oder die einstückige Integration mit den anderen erwähnten Teilen handelt, werden vorzugsweise durch ein Spritzgussverfahren hergestellt. Dabei sind allerdings auch Vakuumverfahren und Druckgussverfahren bevorzugt. Besonders günstige Werkstoffe sind thermoplastische Elastomere und Elastomerverbundstoffe sowie Kautschuke, Silikone und thermoplastische Urethane.

Ein weiterer Aspekt der Erfindung richtet sich auf eine zusätzliche Einstellvorrichtung, mit der die Dämpfungseigenschaften des Dämpfers nach der Herstellung und gegebenenfalls auch noch im Betrieb eingestellt werden können. Dazu wird die Ventileinrichtung mit einer Kraft beaufschlagt, die beispielsweise durch einen Schraubenmechanismus verstellbar ist.

Zum einen können solche Einstellvorrichtungen dazu ausgelegt sein, die Dämpfungseigenschaften durch eine Kraftbeauschlagung des Ventilteils oder der elastischen Aufhängung zu verändern, also zusätzliche Kräfte zu den durch die elastische Auslenkung der Aufhängung bereits erzeugten Kräfte bereitzustellen. Zum Zweiten kann eine solche Einstellvorrichtung zusätzlich oder alternativ dazu auch die Ventileinrichtung selbst beispielsweise fester in eine Aufnahme drücken oder anderweitig in ihrer Position verändern oder stabilisieren, etwa um unerwünschte Leckströmungen zu verkleinern oder auch eigentlich erwünschte Leckströmungen in ihrer Größe zu verändern. Sie kann sich insbesondere dadurch auszeichnen, dass die von ihr ausgeübte Kraft weniger stark von der Auslenkung des Ventilteils abhängt als die elastische Kraft der elastischen Aufhängung. Wenn die Einstellvorrichtung in dieser Weise eine vergleichsweise wenig auslenkungsabhängige Kraft zur Verfügung stellt, kann sie zur "Nullpunktseinstellung" dienen, ohne das Ansprechverhalten der Ventileinrichtung auf große Druckdifferenzen in einer störenden Weise zu verändern.

Aber auch wenn die Einstellvorrichtung eine Veränderung des "Ansprechverhaltens", also der Abhängigkeit der Durchlassöffnung von der Druckdifferenz, mit sich bringt, kann dies erwünscht sein. Vor allem sind dadurch Anpassungen an unterschiedlich schwere zu dämpfende Teile oder unterschiedliche Bewegungsgeschwindigkeiten möglich, ohne die Ventileinrichtung selbst austauschen oder verändern zu müssen.

Bei einer bevorzugten Ausgestaltung drückt die Einstellvorrichtung auf die bereits beschriebene Ventileinrichtung in einstückiger Ausführung mit einer das Ventilteil und die Aufhängung geschlossen umgebenden Halterung, und zwar in einer zu der Bewegung des Ventilteils parallelen Richtung. Sie kann dabei auf die Halterung drücken und damit den Sitz der Ventileinrichtung kontrollieren, oder auf die elastische Aufhängung, um deren elastische Eigenschaften mit zu verändern. Es sind natürlich auch Übergangszustände denkbar.

Bei einer in den Ausführungsbeispielen näher erläuterten Bauform weist die Einstellvorrichtung hierzu eine Schraubenfeder und eine Verstellschraube auf.

Bislang wurde davon ausgegangen, dass der Dämpfer zwei Bewegungsrichtungen kennt und in einer der beiden oder in beiden Richtungen dämpft. Besonders bevorzugt sind Ausführungsformen, bei denen die Dämpfungswirkung vorwiegend in einer Richtung auftritt und die andere Bewegungsrichtung vergleichsweise weniger oder ungedämpft bleibt. Ein gewisses Mindestmaß an Dämpfung wird zwar in dieser zweiten Richtung jedenfalls dann, wenn der Dämpfer an der entsprechenden Bewegung direkt teilnimmt, durch die Ausgleichsluftbewegungen notwendig sein. Dieses Maß kann jedoch durch die Bemessung der entsprechenden Strömungswege relativ klein gehalten werden.

Ferner wurde bereits darauf hingewiesen, dass erfindungsgemäß eine parallel zu dem Dämpfer wirkende Schraubenfeder vorgesehen ist Diese wirkt extern und exzentrisch zu dem Dämpfer, um sie baulich leicht zugänglich zu halten. Zur Stabilisierung und Vermeidung von Knickbewegungen hat es sich dabei als besonders vorteilhaft herausgestellt, den Dämpfer mit zumindest drei Montageelementen auszustatten, von denen zumindest zwei entlang dem Zylinder (eines hier betrachteten Lineardämpfers) axial, also in Bewegungsrichtung, beabstandet sind. Das dritte Montageelement kann dann mit einer Führung der Kolbenstange gekoppelt sein, um ein Verbiegen oder Abknickender ebenfalls von der Federkraft beaufschlagten Kolbenstange zu verhindern und diese seitlich zu stabilisieren.

Die Erfindung richtet sich somit auf ein Schiebetürsystem mit einem Schiebetürelement, das in einer Schieberichtung verschoben werden kann und eine schieberichtungsparallele Seitenkante aufweist, einer Schiene zum Halten des Schiebetürelements, die zumindest einen Raum oberhalb der Seitenkante mit einem Schienenschenkel umfasst und dadurch zumindest in einer zu dem Schiebetürelement senkrechten Blickrichtung abdeckt und gegenüber der das Schiebetürelement verschoben werden kann, und einem Dämpfer zum Abdämpfen zumindest eines Teils von Verschiebebewegungen des Schiebetürelements gegenüber der Schiene, der einerseits an der Schiene und andererseits an dem Schiebetürelement angebracht ist, wobei der Dämpfer so innerhalb der Schiene angebracht ist, dass er durch die Schiene in der auf dem Schiebetürelement senkrechten Blickrichtung abgedeckt ist.

Im Folgenden wird die Erfindung anhand eines Ausführungsbeispiels erläutert, wobei die offenbarten Einzelmerkmale auch in anderen Kombinationen erfindungswesentlich sein können und sich implizit, wie bereits erwähnt, sowohl auf die Vorrichtungskategorie als auch auf die Verfahrenskategorien der Erfindung beziehen.
- Figur 1: zeigt eine Längsschnittdarstellung eines erfindungsgemäßen Lineardämp- fers.
- Figur 2: zeigt eine perspektivische Explosionsdarstellung des Lineardämpfers aus Figur 1.
- Figur 3: zeigt verschiedenen Seitenansichten, perspektivische Ansichten und eine Draufsicht auf eine Elastomerteil einer Ventileinrichtung des Lineardämp- fers aus dem Figuren 1 und 2.
- Figur 4: zeigt den Lineardämpfer aus den Figuren 1 und 2 in vier verschiedenen Positionen zur Veranschaulichung seiner Funktionsweise.
- Figur 5: zeigt einen Ausschnitt eines erfindungsgemäßen Schiebetürsystems mit einem dem Dämpfer nach den Figuren 1 - 4 entsprechenden Dämpfer in teilweise auseinander genommenem Zustand.
- Figur 6: zeigt den Ausschnitt aus Figur 5 in weiter zusammengesetztem Zustand.
- Figur 7: zeigt den Ausschnitt aus den Figuren 5 und 6 in gänzlich zusammenge- setztem Zustand.
- Figur 8: zeigt einen größeren Ausschnitt des Schiebetürsystems aus den Figuren 5 -7.
- Figur 9: zeigt einen weiteren erfindungsgemäßen Dämpfer als Modifikation des Dämpfers aus den Figuren 1 - 4 und des Dämpfers aus den Figuren 5 - 7.
- Figur 10: zeigt eine Schnittdarstellung eines Teils des Dämpfers aus Figur 9.
- Figur 11: zeigt ein weiteres Beispiel für einen Dämpfer in perspektivischer Ansicht.
- Figur 12: zeigt den Dämpfer aus Figur 11 im Schnitt quer zur Rotationsachse in drei verschiedenen Stellungen.

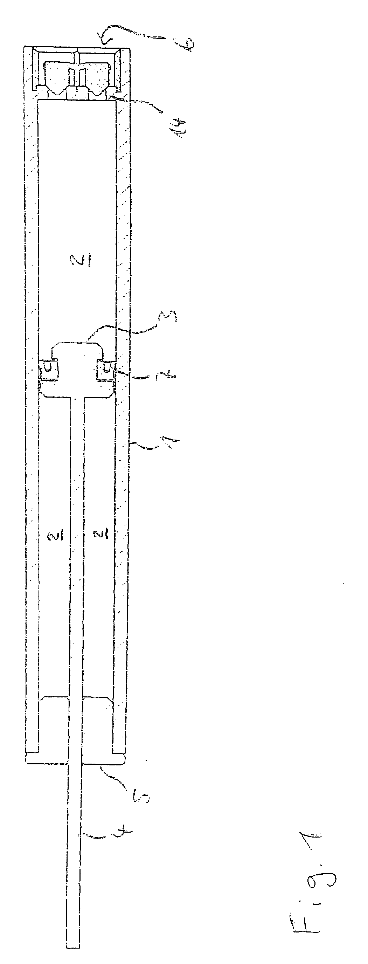

Figur 1 zeigt einen erfindungsgemäßen Lineardämpfer in Längsschnittdarstellung. Es handelt sich dabei um einen Pneumatikzylinder 1, der eine pneumatische Kammer 2 umschließt. In dieser pneumatischen Kammer 2 ist ein Pneumatikkolben 3 mit einer Kolbenstange 4 geführt. Der Pneumatikzylinder ist an seinem in Figur 1 linken Ende mit einem die Kolbenstange 4 führenden Stopfen 5 verschlossen und an seinem in Figur 1 rechten Ende mit einer im weiteren Verlauf noch näher beschriebenen Ventileinrichtung 6 ausgestattet. Der Kolben 3 ist gegenüber der Innenmantelwand des Zylinders 1 mit einer im Wesentlichen ringförmigen Dichtung mit im Wesentlichen U-förmigem Querschnittsprofil abgedichtet, die mit 7 beziffert ist. Der radial äußere Schenkel des U-Querschnittsprofils bildet dabei eine etwas nach außen abgestellte und damit an der Innenmantelwand des Zylinders 1 anliegende Dichtlippe.

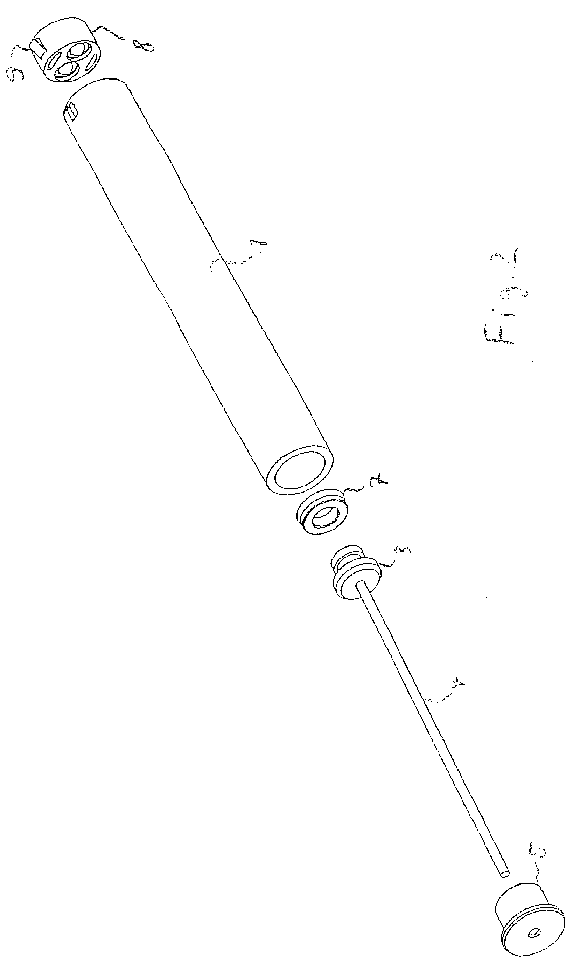

Figur 2 zeigt die anhand Figur 1 erläuterten Teile in einer explosionsartigen Darstellung. Zusätzlich zu Figur 1 erkennt man hier, dass die Ventileinrichtung 6 ein in Figur 1 stöpselartig in das Ende des im Wesentlichen rohrförmigen Pneumatikzylinders 1 klemmend eingesetztes Elastomerteil 8 aufweist und dass dieses Elastomerteil 8 eine in Figur 2 nach oben weisende Rastnase 9 zum Eingriff in eine entsprechende Ausnehmung an dem Pneumatikzylinder 1 trägt.

Im Übrigen verdeutlicht Figur 2, dass der Lineardämpfer aus Figur 1 durch Aufsetzen des Dichtrings 7 auf den Kolben 3, Einführen des Kolbens 3 mit Hilfe der Kolbenstange 4 in den Zylinder 1, Aufsetzen des Stopfens 5 auf die Kolbenstange 4 und Einsetzen des Stopfens 5 in das offene Ende des Zylinders 1 sowie das erwähnte Einsetzen des Elastomerteils 8 der Ventileinrichtung 6 zusammengebaut werden kann.

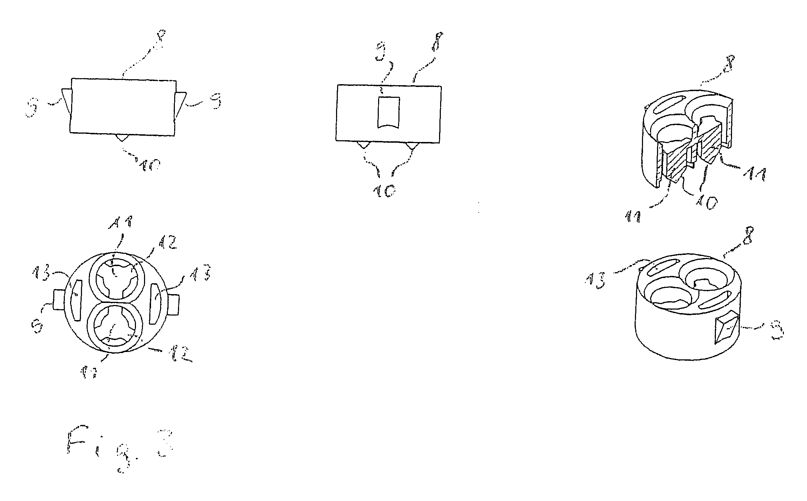

Figur 3 zeigt das Elastomerteil 8 aus Figur 2, das auch in Figur 1 durch die abweichende Schraffur zu erkennen ist, in Einzelheiten. Oben links und in der Mitte sind zwei seitliche Ansichten mit in Figur 3 vertikal liegender Zylinderachse zu sehen, die zueinander um 90° verdreht sind. Dabei zeigen sich zwei Rastnasen 9 gemäß Figur 2. Im Übrigen hat das Elastomerteil eine im Wesentlichen zylinderförmige einhüllende Form, die auch in den übrigen Darstellungen zu erkennen ist. Die im unteren Bereich erkennbaren Spitzen sind, wie die rechts oben dargestellte perspektivische Schnittansicht zeigt, nach unten weisende konische Ventilflächen 10 und Abschlussflächen von im Übrigen im Wesentlichen zylindrischen Stöpseln 11, die in dem Elastomerteil 8 vorgesehen und gehalten sind. Die zylindrischen Stöpsel 11 sind, wie sich auch anhand der links unten dargestellten Draufsicht und der nicht geschnittenen perspektivischen Ansicht rechts unten zeigt, paarweise jeweils in einem zylindrischen Loch in dem Elastomerteil 8 vorgesehen und an drei unter 120° zueinander liegenden Elastomerbrücken 12 einstückig als Bestandteil des Elastomerteils 8 ausgebildet. Sie halten, von den nur in ihrem oberen Bereich vorgesehenen Brücken 12 abgesehen, einen radialen Abstand von den Innenbegrenzungsflächen der Löcher und geben damit einen gewissen Strömungsquerschnitt in der Zylinderachse des Lineardämpfers frei. Im Übrigen sind die Löcher im oberen Bereich angefast und weisen am unteren Ende stattdessen eine gestufte Form auf, mit der sie sich, wie Figur 1 zeigt, in justierender Weise an entsprechende Kanten in einer passenden Zwischenwand 14 des Zylinderrohrs 1 einfügen.

Zum Einsetzen in das Zylinderrohr 1 sind die bereits erwähnten Rastnasen 9 vorgesehen, die infolge in Figur 3 ebenfalls dargestellter Schlitze 13 gegen einen nicht allzu großen Widerstand nach innen verpresst werden können. Damit sind die Schlitze 13 nach Einsetzen des Elastomerteils 8 in das Zylinderrohr 1 im Wesentlichen dicht.

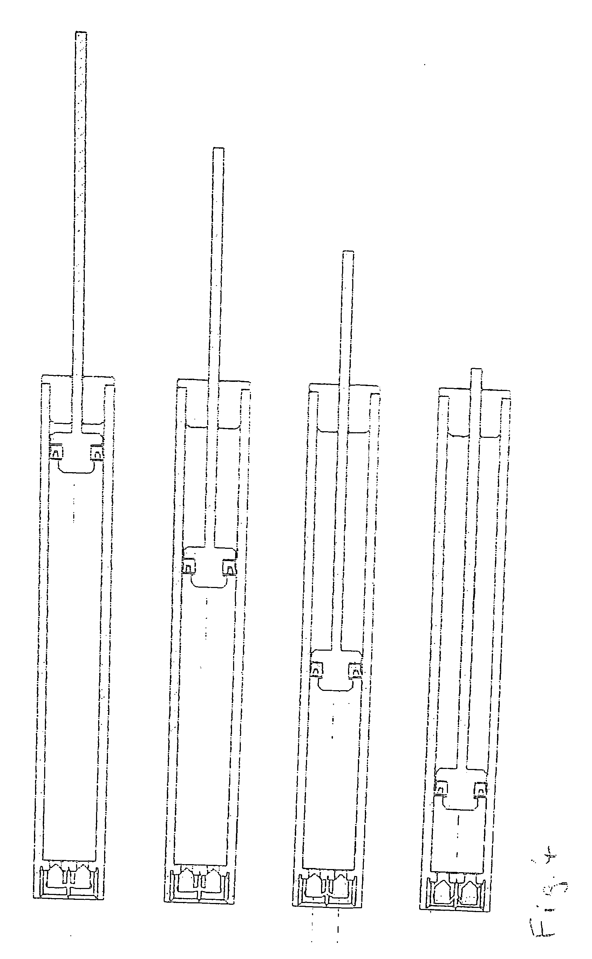

Figur 4 zeigt den Lineardämpfer im zusammengebauten Zustand entsprechend Figur 1, aber um 180° gedreht, in vier verschiedenen Arbeitspositionen. Figur 4 trägt der Klarheit der Darstellung halber keine Bezugsziffern. Es wird auf die Erläuterungen zu den Figuren 1 bis 3 und die entsprechenden zeichnerischen Übereinstimmungen verwiesen.

In Figur 4 ist die Kolbenstange 4 in der oberen Darstellung ganz ausgezogen und in der unteren Darstellung fast ganz eingeschoben, so dass der Kolben 3 dementsprechend unterschiedliche Positionen innerhalb der pneumatischen Kammer 2 einnimmt. Da der Kolben 3 mit Hilfe der Ringdichtung 7 zwei Teile der pneumatischen Kammer voneinander abgrenzt, wird in dem in Figur 4 linken (und in Figur 1 rechten) Teil der pneumatischen Kammer 2 Umgebungsluft komprimiert. Dies soll durch die von oben nach unten zunehmende Dichte die Luft symbolisierender Punkte dargestellt sein. Die in Figur 4 rechte Kammer entwickelt dabei keinen wesentlichen Unterdruck, weil die Durchführung der Kolbenstange 4 durch den Stopfen 5 entsprechend undicht ist. Im umgekehrten Fall, also bei einem Ausziehen der Kolbenstange 4, dichtet die Ventileinrichtung 6 mit Ausnahme der Restundichtigkeiten der Schlitze 13 relativ gut ab. In diesem Fall sorgt die U-Profilform der Dichtung 7 für einen Druckausgleich zwischen den beiden Teilen der pneumatischen Kammer 2.

Die bereits erwähnten konischen Dichtflächen 10 der zylindrischen Stöpsel 11 des Elastomerteils 8 aus Figur 3 liegen nach Einsetzen des Elastomerteils 8 in das in Figur 4 linke Ende des Zylinderrohres 1 an den Rändern von dazu passenden Bohrungen in der bereits erwähnten Zwischenwand 14 des Zylinderrohres 1 an und sind durch ein gewisses Übermaß mit einer leichten Anpresskraft infolge der elastischen Brücken 12 daran gehalten, werden also in anderen Worten durch diese Anlage etwas nach links ausgelenkt. Infolge dieser elastischen Spannung dichten die konischen Dichtflächen 10 mit den Bohrungen solange ab, bis der durch die Verschiebung des Kolbens 3 in dem linken Teil der pneumatischen Kammer 2 erzeugte Druck eine ausreichend große Kraft aufgebaut hat, um die Stöpsel 11 weiter axial auszulenken. Dies soll in Figur 4 in der von oben gerechnet dritten Abbildung der Fall sein. In der vierten Abbildung sind die Stöpsel ausgelenkt und geben dementsprechend zwischen den Bohrungen und den konischen Dichtflächen einen Querschnitt, nämlich eine Drosselöffnungsfläche, frei. In der unteren Darstellung in Figur 4 kann also die komprimierte Luft durch die Ventileinrichtung 6 nach außen entweichen. In den oberen drei Darstellungen wird dieser Druck erst aufgebaut. Die freigegebene Drosselöffnungsfläche ist infolge der elastischen Eigenschaften der Aufhängung durch die Brücken 12 druckabhängig größer oder kleiner.

Damit zeigt der Lineardämpfer die bereits beschriebenen Eigenschaften des Aufbaus einer gewissen Gegenkraft und der Vergrößerung der Drosselöffnungsfläche ab Erreichen dieser Gegenkraft, d. h. ab Erreichen eines bestimmten Drucks. Im Übrigen wird auf die Erläuterung in der oben stehenden Beschreibung der Erfindung verwiesen.

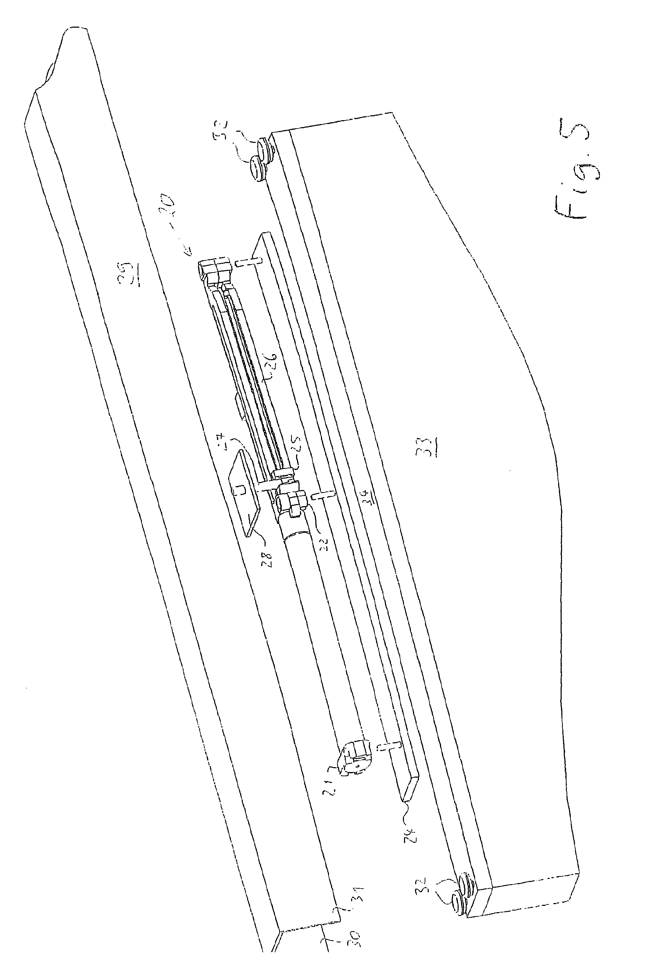

Figur 5 zeigt den Dämpfer aus den Figuren 1 - 4 in einer hier summarisch mit 20 beschriebenen Form. Zusätzlich zu den anhand den Figuren 1 - 4 erläuterten Einzelheiten weist dieser Dämpfer 20 Montageelemente 21, 22 und 23 auf, die vertikale Löcher enthalten. Diese Löcher sind in Figur 5 ebenfalls dargestellten vertikalen Montagestiften auf einer Montageplatte 24 zugeordnet und von diesen zu durchdringen.

Die Kolbenstange 4 aus Figur 1 ist in Figur 5 nicht zu sehen und an ihrem distalen Ende mit einem Aufnahmeriegel 25 verbunden, der in einer Schiene 26 zwischen den Montagelementen 22 und 23 längsverschieblich ist. In Figur 5 ist erkennbar, dass die Kolbenstange 4 eingeschoben und damit der Aufnahmeriegel 25 in seiner linken Endposition angelangt ist. Der Aufnahmeriegel 25 enthält wiederum ein vertikales Loch, das einem Fangstift 27 an einer Montageplatte 28 zugeordnet und von diesem zu durchdringen ist.

Figur 5 zeigt ferner im oberen Bereich der Figur eine obere Schiene des Schiebetürsystems, die mit 29 bezeichnet ist und ein U-Profil darstellt. Den Innenwänden der vertikalen Schenkel 30 und 31 der Schiene 29 sind Führungsrollen 32 mit vertikal liegenden Drehachsen zugeordnet, die auf einer die Seitenkante eines Schiebetürelements 33 bildenden Schiene 34 montiert sind. Wie im weiteren Verlauf der Beschreibung noch deutlicher werden wird, ist das Schiebetürelement im fertig montierten Zustand hinsichtlich seines Gewichts von Rollen einer hier nicht dargestellten unteren Schiene im Bodenbereich getragen und wird von der hier erläuterten und zeichnerisch dargestellten oberen Schiene, d. h. konkret von der Anlage der Führungsrollen 32 an den Innenwänden der vertikalen Schenkel 30 und 31 des U-Profils der Führungsschiene 29, lediglich seitwärts gehalten.

Figur 5 zeigt insgesamt damit den oberen Rand des Schiebetürelements 33 zusammen mit einem linken Endbereich der Schiene 29 und den diesem linken Ende zugeordneten Dämpfer 20.

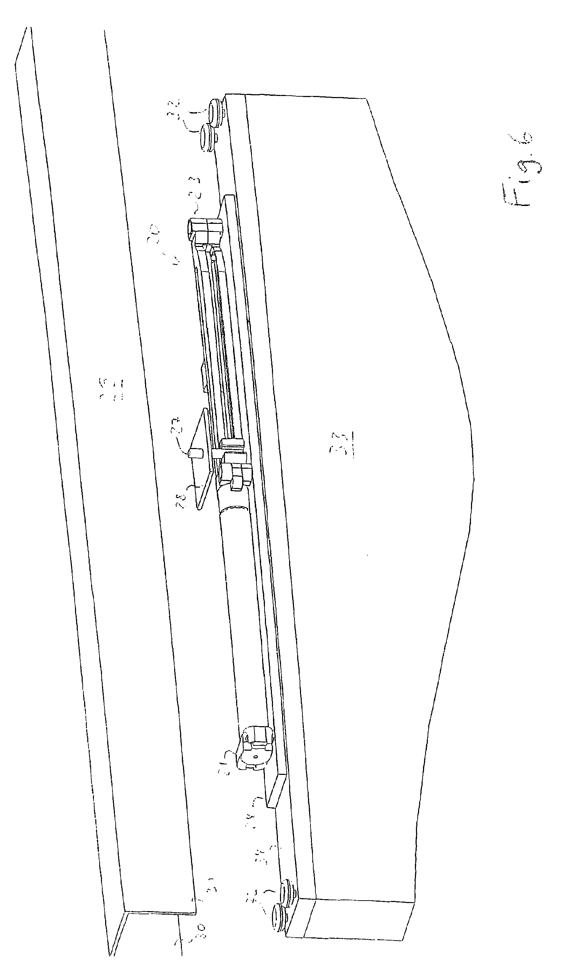

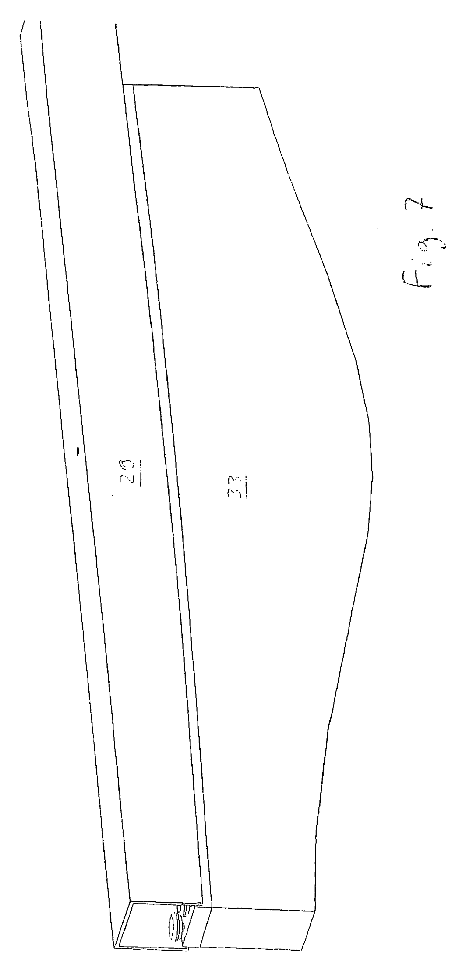

Die Figuren 6 und 7 veranschaulichen denselben Ausschnitt in weiter zusammengesetztem Zustand. In Figur 6 ist die Montageplatte 24 fest auf der Schiene 34 des Schiebetürelements 33 angebracht, und zwar durch Aufschrauben. Hier können aber auch Klemmverbindungen Anwendung finden. Ferner ist der Dämpfer 20 mit den bereits erwähnten Löchern der Montageelemente 21, 22 und 23 auf die Montagestifte der Montageplatte 24 aufgesteckt, wobei der Dämpfer 20 mit der Montageschiene 24 auch in der Schiene 29 angebracht sein könnte, wenn der Fangstift 27 an dem Schiebetürelement 33 angebracht wäre. Der Fangstift 27 greift in das Loch des Aufnahmeriegels 25 ein. Denkt man sich weiter die Montageplatte 28 des Fangstifts 27 an der Innenseite des horizontalen Schenkels der Schiene 29 befestigt, etwa wieder durch Anschrauben oder auch durch eine Klemmverbindung, und die Schiene 29 entsprechend abgesenkt, wie Figur 7 zeigt, so wird der Funktionsmechanismus deutlich:

Der Fangstift 27 ist ortsfest mit der Schiene 29 gekoppelt (könnte aber natürlich auch umgekehrt mit dem Schiebetürelement 33 gekoppelt sein). Im Rahmen des gedämpften Bewegungsabschnitts nimmt er den Aufnahmeriegel 25 mit, der innerhalb der Schiene 26 gleitet und dabei die Kolbenstange 4 des Dämpfers hin- und herbewegt. In der in den Figuren dargestellten maximal linken Position des Schiebetürelements 33 ist die Kolbenstange 4 dabei ganz eingefahren und das Volumen der pneumatischen Kammer 2 zwischen dem Kolben 3 und der Ventileinrichtung 6 damit minimiert. Bei der Bewegung in diese Position dämpft der Dämpfer 20 in der bereits anhand der Figuren 1 - 4 erläuterten Weise. Damit wird ein hartes Anschlagen des Schiebetürelements 33 in der Endposition vermieden. Eine Lösung, bei der das distale Ende der Kolbenstange 4 relativ zu dem Schiebetürelement 33 ruhen würde und umgekehrt der restliche Dämpfer 20 im Bereich der gedämpften Bewegung relativ zu der Schiene 29 ruhen würde, ist natürlich genauso gut denkbar.

Bei der umgekehrten Bewegung aus der linken Endposition heraus zieht der Fangstift 27 den Aufnahmeriegel 25 entlang der Schiene 26 mit und zieht damit die Kolbenstange 4 letztlich vollständig aus. Im letzten Stück der Bewegung weicht die Form der Schiene 26 von der geraden Bewegungsbahn des Fangstifts 27 etwas ab und ist, wie die Figuren 5 und 6 zeigen, etwas nach hinten gekrümmt. In diesem Bereich kippt der Aufnahmeriegel 25 aus der Bahn des Fangstifts 27 weg und gibt diesen frei, so dass das Schiebetürelement 33 unabhängig von dem Dämpfer 20 weiter verschoben werden kann und nur noch durch die Führungsrollen 32 geführt ist. In der Umgebung einer entgegengesetzten Position kann eine entsprechende Dämpferkonstruktion vorgesehen sein.

Wenn das Schiebetürelement 33 zurückgekehrt, fängt der Fangstift den Aufnahmeriegel 25 in dessen maximal rechter Position in den Figuren 5 und 6 ein, bewegt ihn entlang der Schiene 26 weiter und komprimiert damit die Luft in der Pneumatikkammer 2.

Figur 7 zeigt, dass sowohl die Lagerkonstruktion der Führungsrollen 32 als auch die komplette Konstruktion des Dämpfers 20 mit seinen Montageeinrichtungen von der Schiene 29 gut abgedeckt werden, und zwar bei diesem Ausführungsbeispiel in den horizontalen Blickrichtungen nach vorne und hinten.

Insgesamt bietet die Erfindung eine optisch vorteilhafte und produktionstechnisch sowie montagetechnisch einfache und kostengünstige Lösung zur Dämpfung von Schiebetürelementen, insbesondere besonders schweren Schiebetürelementen.

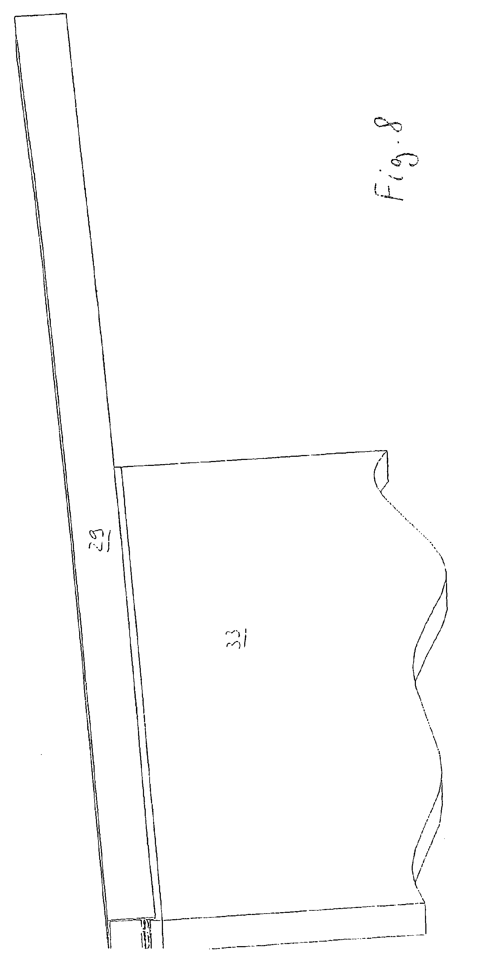

Figur 8 zeigt schließlich einen größeren Teil des Schiebetürelements 33 aus den Figuren 5 bis 7 und einen größeren Teil der Schiene 29, wobei die innerhalb der Schiene 29 liegenden und damit eigentlich von ihr verdeckten Teile zur Veranschaulichung eingezeichnet sind.

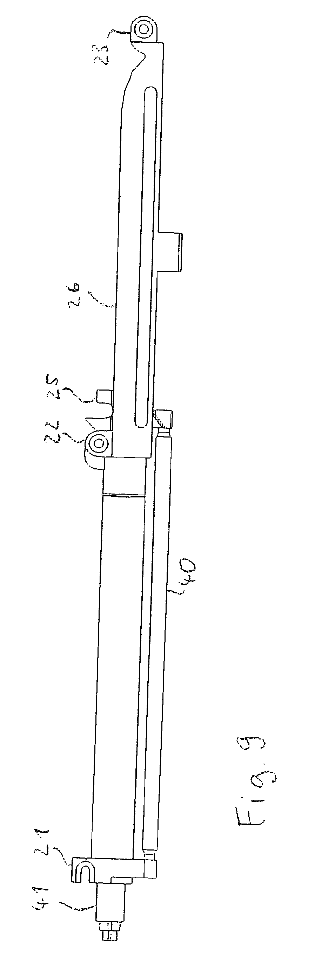

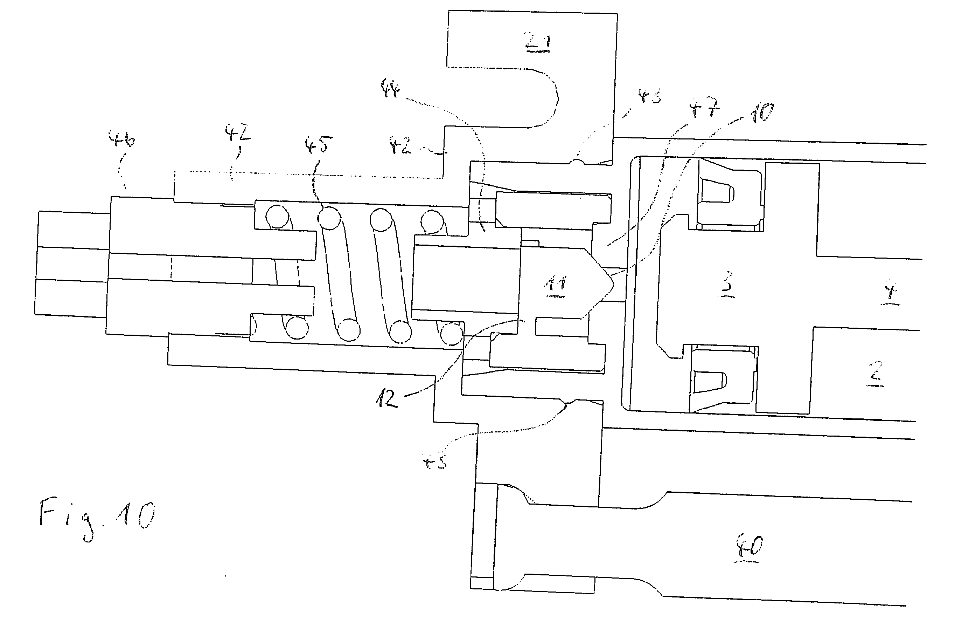

Ferner zeigen die Figuren 5 bis 8 nicht eine bei dem Ausführungsbeispiel aber ebenfalls vorgesehene Schraubenfeder, die in Figur 5 und Figur 6 hinter dem Dämpferzylinder liegt und in den im Folgenden noch erläuterten Figuren 9 und 10 an einem etwas abweichenden Ausführungsbeispiel erkennbar ist. Sie koppelt eine hintere Verlängerung des Aufnahmeriegels 25 an das Montageelement 21 und zieht daher das Schiebetürelement 33 im Rahmen der gedämpften Bewegungsstrecke langsam in die Anschlagposition. Sie wird bei einem Herausziehen des Schiebetürelements 33 aus der Endposition wieder gespannt. Im gespannten Zustand ist sie durch einen Mechanismus arretiert, der mit der bereits erwähnten Kippbewegung des Aufnahmeriegels 25 am rechten Ende seiner Bewegungsbahn in der Schiene 26 zusammenwirkt.

Die drei Montageelemente 21, 22 und 23 stabilisieren den Dämpfer 20 gegen ein entsprechendes Biegemoment. Dabei legen die Montageelemente 21 und 22 den Zylinder fest und fixiert das Montageelement 23 die Position der Schiene 26, die eine Führung für die Kolbenstange 4 bildet.

Figur 9 zeigt eine Ansicht einer von dem Dämpfer 20 aus den Figuren 5 - 8 abweichenden Ausführungsform, und zwar in Bezug auf die Lage in den Figuren 5 - 8 von unten gesehen. Neben den bereits beschriebenen Teilen weist der Dämpfer 20 in Figur 9 die bereits erwähnte Feder in Form einer lang gestreckten Schraubenfeder 40 auf. Die Stabilisierungswirkung der drei Montageelemente 21, 22 und 23 ist in dieser Figur 9 noch einmal gut zu erkennen.

Ferner zeigt Figur 9 am linken Rand eine in den Figuren 1 - 8 nicht vorhandene, jedoch in Figur 10 im Einzelnen dargestellte Einstellvorrichtung 41. Der Dämpfer aus den Figuren 9 und 10 weicht diesbezüglich und bezüglich der genaueren Ausbildung der Ventileinrichtung 6 von den Figuren 1 bis 8 ab.

Man erkennt zunächst, dass das Elastomerteil 8 bei diesem Ausführungsbeispiel nur ein Ventilteil 11 statt der in den Figuren 1 - 4 erkennbaren zwei Ventilteile 11 aufweist. Dieses Ventilteil 11 ist mit elastischen Aufhängungen 12 in gleicher Weise ausgestattet wie anhand der Figuren 1 - 4 erläutert, insbesondere einstückig mit einer umgebenden Halterung integriert als Stöpsel in das Stirnende des Dämpfers eingesetzt. Abweichend ist ferner, dass statt der Rastnasen 9 das Elastomerteil 8 nunmehr lediglich in eine zylindrische Aufnahme eingesteckt und über ein Flanschbauteil 42 mit einem radial nach innen verjüngten Teil gehalten ist. Das Flanschbauteil 42 ist über eine Rasteinrichtung 43 geklemmt. Es ist baulich einheitlich ausgeführt mit dem Montageelement 21 und mit einer Halterung für die bereits beschriebene Feder 40.

Ferner liegt auf der kolbenabgewandten Seite der Ventileinrichtung 6 ein Zwischenelement 44 mit einem zentralen Rohrteil und einem davon radial nach außen abstehenden Kragen an.

Auf den Kragen drückt in Figur 10 von rechts, also von der kolbenabgewandten Seite, eine Schraubenfeder 45, die von einer Verstellschraube 46 bespannt wird, die ihrerseits wiederum in dem Flanschbauteil 42 eingeschraubt ist. Somit kann durch Verdrehen der Verstellschraube 46 die Spannung der Schraubenfeder 45 geändert werden und damit der Druck, den der Kragen des Zwischenelements 44 und der dem Elastomerteil 8 zugewandte Teil des Rohrabschnitts derselben auf das Elastomerteil 8 ausüben.

Dabei kann durch einen angepasst auf die Geometrie des Elastomerteils 8 relativ kurzen Überstand des dem Elastomerteil 8 zugewandten Rohrteils des Zwischenelements 44 gegenüber dessen Kragen der Druck im Wesentlichen auf dem äußeren Rand des Elastomerteils 8 oder auf dem Ventilteil 11 bzw. der elastischen Aufhängung 12 liegen. Im erstgenannten Fall wird eher das Ventilteil 11 stärker an den zu den Zylinder gehörenden Anschlag oder die Zwischenwand 47 angedrückt (in Figur 1 mit 14 bezeichnet), ohne dass dabei die elastischen Eigenschaften der Aufhängung 12 wesentlich verändert werden. Im zweitgenannten Fall werden gleichzeitig diese elastischen Eigenschaften mit beeinflusst, öffnet sich also bei zunehmendem Andruck das Ventilteil 11 weniger leicht bei vergleichbarem Überdruck in der pneumatischen Kammer.

Die geometrische Ausgestaltung des Zwischenelements 44 und die Verstellschraube 46 erlauben eine Justage und nachträgliche Anpassung, mit der sowohl gewissermaßen eine "Nullpunkteinstellung" (also eine Einstellung der druckfreien Drosselöffnung oder des Überdrucks, ab dem sich die Drosselöffnung überhaupt öffnet) als auch eine Einstellung der "Steigung" (also die Abhängigkeit der Drosselöffnung vom Überdruck) anwendungsabhängig oder nach Benutzerwunsch verändert werden können.

Dabei bleibt die elastische Aufhängung für die Dämpfungseigenschaften ausschlaggebend und wesentlich, insbesondere weil die Schraubenfeder 45 in Folge ihrer erheblichen Länge durch eine Bewegung des Ventilteils 11 kaum in ihrer Kraft verändert wird.

Es sind auch Ausführungsformen denkbar, bei denen der Dämpfer in zwei Richtungen dämpfend wirkt, entweder indem das oder die Ventilteile so aufgehängt sind, dass sie sich in zwei Richtungen bewegen können und dementsprechend einen Überdruck aus zwei Richtungen durchlassen können oder indem zwei Ventileinrichtungen vorgesehen sind. Durch entsprechende Einwegventile kann dann für die jeweilige Belüftung zur Vermeidung von unerwünschten Unterdruckzuständen gesorgt werden.

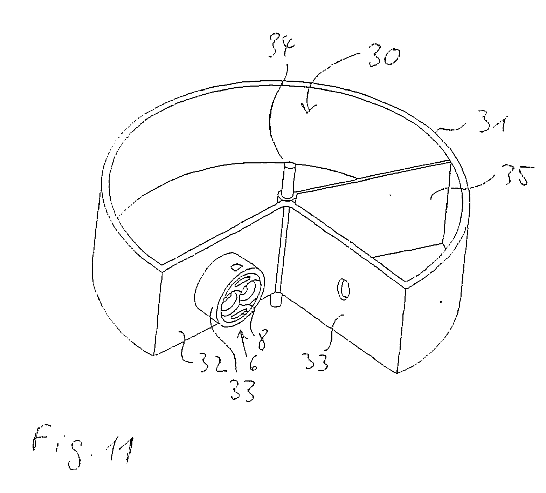

Ein weiteres Beispiel für einen Dämpfer, hier einen rotatorischen Dämpfer, zeigt Figur 11. Hier handelt es sich um eine im Grundriss etwa ¾ -kreisförmige zylindrische pneumatische Kammer 30 mit einer etwa einen Winkel von 270° überspannenden Zylinderaußenwand 31 und zwei das fehlende 90°-Segment begrenzenden radialen Außenwänden 32 und 33. In die Außenwand 32 ist in einer dem ersten Ausführungsbeispiel aus den Figuren 1 bis 4 entsprechenden Weise ein mit dem Elastomerteil 8 aus dem ersten Ausführungsbeispiel identisches entsprechendes Elastomerteil 8 eingesetzt. Dazu weist die Außenwand 32 einen Rohransatz 33 auf, der aufgebaut ist wie das in Figur 1 rechte Ende des dortigen Zylinderrohres 1. Insoweit kann auf die Erläuterungen zum ersten Ausführungsbeispiel Bezug genommen werden.

In der pneumatischen Kammer 30 bewegt sich um eine zentrische Rotationsachse 34 eine radiale Kolbenwand 35 und unterteilt die pneumatische Kammer 30 in zwei Teile.

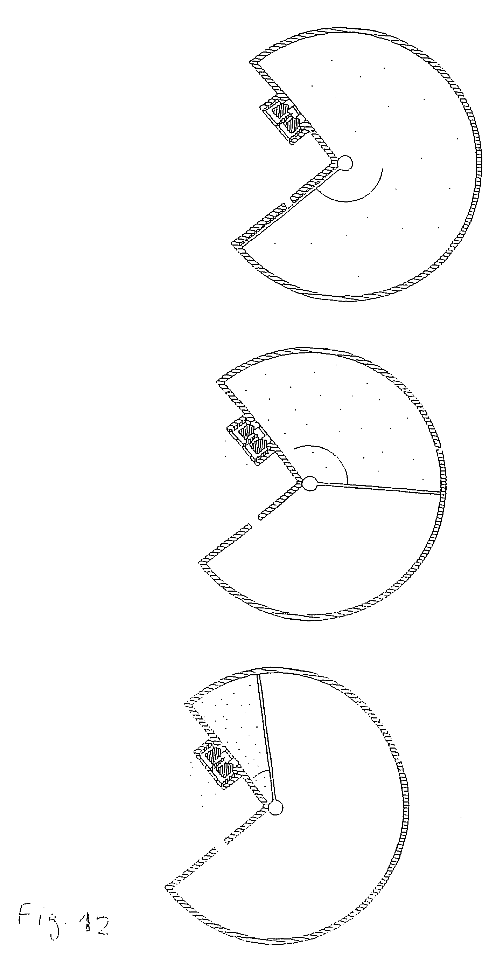

Figur 12 zeigt dies in einer axial gesehenen Schnittdarstellung in drei verschiedenen Stellungen, wobei zur Verbesserung der Klarheit wieder die Bezugszeichen weggelassen sind. Die radiale Kolbenwand 35 bewegt sich in der Reihenfolge der Einzeldarstellungen von oben nach unten von einer maximal von der Ventileinrichtung entfernten Position auf diese zu und komprimiert dabei die in dem kleiner werdenden Teil der pneumatischen Kammer 30 befindliche Umgebungsluft. In dem Zustand gemäß der untersten Darstellung ist der Druck soweit angestiegen, dass die Ventileinrichtung die Drosselöffnung freigegeben hat und damit den Druck begrenzt und stabilisiert. Der sich vergrößernde Teil der pneumatischen Kammer 30 wird durch ein in Figur 11 symbolisch dargestelltes Loch in der Wand 33 belüftet.

Alternativ dazu könnte die Ventileinrichtung auch in der Kolbenwand 35 untergebracht sein, womit die Notwendigkeit der Belüftung des zweiten Teils der Kammer 30 entfallen würde. Ferner könnten die radialen Wände 32 und 33 auch zusammenfallen, so dass die Ventileinrichtung einerseits den einen Teil der Kammer 30 entlüftet und andererseits den anderen Teil belüftet. Es sind insbesondere auch größere oder kleinere Drehwinkel als bei diesem Ausführungsbeispiel denkbar.

## Patentansprüche

1. Schiebetürsystem mit
einem Schiebetürelement (33), das in einer Schieberichtung verschoben werden kann und eine schieberichtungsparallele obere Seitenkante (34) aufweist,
einer Schiene (29) zum Halten des Schiebetürelements (33), die zumindest einen Raum oberhalb der oberen Seitenkante (34) mit einem Schienenschenkel (30, 31) umfasst und **dadurch** zumindest in einer zu dem Schiebetürelement (33) senkrechten Blickrichtung abdeckt und gegenüber der das Schiebetürelement (33) verschoben werden kann,
und einem Lineardämpfer (20) mit einem Zylinder und einer Kolbenstange (4) zum Abdämpfen zumindest eines Teils von Verschiebebewegungen des Schiebetürelements (33) gegenüber der Schiene (29), der einerseits an der Schiene (29) und andererseits an dem Schiebetürelement (33) angebracht ist,
wobei der Dämpfer (20) so innerhalb der Schiene (29) angebracht ist, dass er durch die Schiene (29) in der auf dem Schiebetürelement (33) senkrechten Blickrichtung abgedeckt ist,
wobei eine zu dem Dämpfer (20) parallel angeordnete Schraubenfeder (40) vorgesehen ist und
die Schraubenfeder (40) und der Lineardämpfer (20) nur entlang einem gedämpften Bewegungsabschnitt des Schiebetürelements (33) in der Umgebung einer Grenze der Gesamtbewegungsstrecke des Schiebetürelements (33) wirken,
**dadurch gekennzeichnet, dass** die Schraubenfeder (40)zur leichteren baulichen Zugänglichkeit extern und zu dem Dämpfer (20) exzentrisch angeordnete ist.

2. Schiebetürsystem nach Anspruch 1, bei dem der Dämpfer (20) zumindest drei Montageelemente (21 - 23) aufweist, von denen zwei (21, 22) entlang dem Zylinder des Dämpfers (20) voneinander axial beabstandet sind und ein drittes (23) axial von diesen (21, 22) und von dem Zylinder beabstandet an einer Führung (26) der Kolbenstange (4) angeordnet ist.

3. Schiebetürsystem nach Anspruch 2, bei dem die Schraubenfeder (40) mit dem kolbenstangenferneren der zwei entlang dem Zylinder des Dämpfers (20) angeordneten Montageelemente (21, 22) gekoppelt ist.

4. Schiebetürsystem nach Anspruch 2 oder 3, bei dem die Montageelemente (21, 22, 23) Montagelöcher aufweisen oder Klemmverbindungselemente sind.

5. Schiebetürsystem nach einem der Ansprüche 2 bis 4, bei dem die Kolbenstange (4) an ihrem distalen Ende mit einem Aufnahmeriegel (25) verbunden ist, der in einer Schiene (26) zwischen dem kolbenstangennäheren (22) der beiden Montageelemente (21, 22) entlang dem Zylinder des Dämpfers (20) und dem dritten Montageelement (23) längsverschieblich ist und, insbesondere durch ein Loch, für einen Fangstift ausgelegt ist.

6. Schiebetürsystem nach einem der vorstehenden Ansprüche, bei dem der Dämpfer (20) zwischen der Schiene (29) und dem Schiebetürelement (33) angebracht ist.

7. Schiebetürsystem nach Anspruch 6, bei dem der Dämpfer (20) zwischen einem horizontalen Schenkel der Schiene (29) und dem Schiebetürelement (33) angebracht ist.

8. Schiebetürsystem nach einem der vorstehenden Ansprüche, bei dem zwischen der Schiene (29) und dem Schiebetürelement (33) ein Lager (32) zur Lagerung des Schiebetürelements (33) in der Schiene (29) angebracht ist.

9. Schiebetürsystem nach einem der vorstehenden Ansprüche, bei dem der Dämpfer ein pneumatischer Dämpfer ist mit
einer pneumatischen Kammer (2, 30) mit einer beweglichen Wand und
einer Drosselöffnung in einer Wand der pneumatischen Kammer (2, 30), und einer Ventileinrichtung (6) mit einem elastisch aufgehängten Ventilteil (11), welches die Drosselöffnung begrenzt und die Drosselöffnung mit zunehmendem Druck zwischen den Seiten der Ventileinrichtung (6) vergrößert.

10. Schiebetürsystem nach Anspruch 9, bei dem das Ventilteil (11) über eine mit dem Ventilteil (11) einstückig ausgeführte elastische Elastorneraufhängung (12) aufgehängt ist, wobei die Drosselöffnung mit zunehmendem Druck zwischen den Seiten der Ventileinrichtung (6) in Folge einer elastischen Dehnung der Elastomeraufhängung (12) vergrößert wird.

11. Schiebetürsystem nach Anspruch 10, bei dem das Ventilteil (11) mit der elastischen Aufhängung (12) und einer das Ventilteil (11) und die Aufhängung (12) in geschlossener Form umgebenden Halterung einstückig (8) ausgeführt ist.

12. Schiebetürsystem nach einem der Ansprüche 9 - 11, bei dem der Dämpfer zum Dämpfen einer Bewegung mit Hilfe der Drosselöffnung in einer ersten Richtung ausgelegt ist, wobei eine Bewegung in der entgegengesetzten Richtung weniger oder nicht gedämpft ist.

## Claims

1. A sliding door system having
a sliding door element (33) displaceable in a sliding direction and with an upper side edge (34) parallel to said sliding direction,
a rail (29) for holding said sliding door element (33), embracing at least a space over said upper side edge (34) by a rail leg (30, 31) and covering said space thereby in at least a viewing direction perpendicular to said sliding door element (33), in relation to which rail (29) said sliding door element (33) can be displaced,
and a linear damper (20) having a cylinder and a piston rod (4) for damping at least a part of displacement movements of said sliding door element (33) in relation to said rail (29), said damper (20) being mounted to said rail (29) on the one hand and to said sliding door element (3) on the other hand,
wherein said damper (20) is mounted within said rail (29) such that it is covered by said rail (29) in said viewing direction perpendicular to said sliding door element (33),
wherein a helical spring (40) arranged parallel to said damper (20) is provided and
said helical spring (40) and said linear damper (20) coming to effect only along a damped movement portion of said sliding door element (33) near to a limit of the overall movement length of said sliding door element (33),
**characterized in that**, for an improved mounting access, said helical spring (40) is mounted externally and excentrically in relation to said damper (20).

2. The sliding door system of claim 1 wherein said damper (20) comprises at least three mounting elements (21 - 23) whereof two (21, 22) are spaced axially along said cylinder of said damper (20) and a third (23) is arranged in a manner spaced axially from these (21, 22) and from said cylinder, on a guide (26) of said piston rod (4).

3. The sliding door system of claim 2 wherein said helical spring (40) is coupled to that one of said two mounting elements (21, 22) arranged along said cylinder of said damper (20), that is distal to said piston rod (4).

4. The sliding door system of claim 2 or 3 wherein said mounting elements (21, 22, 23) have mounting apertures or are clamping-connection elements.

5. The sliding door system of one of claims 2 to 4 wherein said piston rod (4) is, on its distal end, connected to a receiving bar (25) being longitudinally displaceable in a rail (26) between that one (22) of said two mounting elements (21, 22) along said cylinder of said damper (22), that is proximal to said piston rod (4), and said third mounting element (23), and is adapted for a catch pin, in particular by means of an aperture.

6. The sliding door system of one of the preceding claims wherein said damper (20) is mounted between said rail (29) and said sliding door element (33).

7. The sliding door system of claim 6 wherein said damper (20) is mounted between a horizontal leg of said rail (29) and said sliding door element (33).

8. The sliding door system of one of the preceding claims wherein a support (32) for supporting said sliding door element (33) in said rail (29) is mounted between said rail (29) and said sliding door element (33).

9. The sliding door system of one of the preceding claims wherein said damper is
a pneumatic damper having
a pneumatic chamber (2, 30) comprising a moveable wall and
a throttle orifice in a wall of said pneumatic chamber (2, 30) and a valve means (6) comprising a valve element (11) elastically suspended, defining said throttle orifice, and augmenting said throttle orifice with increasing pressure between the sides of said valve means (6).

10. The sliding door system of claim 9 wherein said valve element (11) is suspended by an elastic elastomer suspension (12) formed integrally with said valve element (11), wherein said throttle orifice is augmented with increasing pressure between said sides of said valve means (6) due to an elastic stretching of said elastomer suspension (12).

11. The sliding door system of claim 10 wherein said valve element (11) is formed integrally (8) with said elastic suspension (12) and a mounting formed around said valve element (11) and said suspension (12) in a closed shape.

12. The sliding door system of one of claims 9 to 11 wherein said damper is adapted for damping a movement by means of said throttle orifice in a first direction and a movement in an opposite direction is damped less or is undamped.

## Revendications

1. Système de porte coulissante avec
un élément de porte coulissante (33) pouvant être coulissé dans une direction de coulissement et comportant un bord latéral supérieur (34) parallèle à la direction de coulissement,
un rail (29) pour le maintien de l'élément de porte coulissante (33), entourant au moins un espace au-dessus du bord latéral supérieur (34) avec une branche de rail (30, 31), tout en le recouvrant ainsi au moins dans un axe de vision vertical à l'élément de porte coulissante (33), et par rapport auquel la porte coulissante (33) peut être déplacée,
et un amortisseur linéaire (20) avec un cylindre et une tige de piston (4) pour amortir au moins une partie des mouvements de coulissement de l'élément de porte coulissante (33) par rapport au rail (29), tout en étant fixé d'une part au rail (29) et d'autre part à l'élément de porte coulissante (33),
dans lequel l'amortisseur (20) est fixé de telle manière à l'intérieur du rail (29), qu'il est recouvert par le rail (29) dans l'axe de vison vertical sur l'élément de porte coulissante (33),
dans lequel est prévu un ressort hélicoïdal (40) disposé parallèlement à l'amortisseur (20), et
le ressort hélicoïdal (40) et l'amortisseur linéaire (20) n'agissent que le long d'une section de mouvement amortie de l'élément de porte coulissante (33), autour d'une limite du trajet de déplacement total de l'élément de porte coulissante (33),
**caractérisé en ce que** le ressort hélicoïdal (40) est disposé de façon externe et excentrique par rapport à l'amortisseur (20), afin de faciliter l'accès à la construction.

2. Système de porte coulissante selon la revendication 1, dans lequel l'amortisseur (20) comporte au moins trois éléments de montage (21-23), dont deux (21, 22) sont espacés axialement l'un de l'autre le long du cylindre de l'amortisseur (20), et un troisième (23) est disposé sur un guidage (26) de la tige de piston (4) tout en étant espacé axialement de ceux-ci (21, 22) et du cylindre.

3. Système de porte coulissante selon la revendication 2, dans lequel le ressort hélicoïdal (40) est accouplé avec celui des deux éléments de montage (21, 22) disposés le long du cylindre de l'amortisseur (20) qui est le plus éloigné de la tige de piston.

4. Système de porte coulissante selon la revendication 2 ou 3, dans lequel les éléments de montage (21, 22, 23) comportent des orifices de montage ou sont des éléments d'assemblage par serrage.

5. Système de porte coulissante selon l'une des revendications 2 à 4, dans lequel la tige de piston (4) est reliée par son extrémité distale à un verrou récepteur (25), qui peut être déplacé en longueur dans un rail (26), entre celui des deux éléments de montage (21, 22) qui est le plus près (22) de la tige de piston le long du cylindre de l'amortisseur (20) et le troisième élément de montage (23), et qui est conçu pour une goupille de capture, en particulier à travers un trou.

6. Système de porte coulissante selon l'une des revendications précédentes, dans lequel l'amortisseur (20) est fixé entre le rail (29) et l'élément de porte coulissante (33).

7. Système de porte coulissante selon la revendication 6, dans lequel l'amortisseur (20) est fixé entre une branche horizontale du rail (29) et l'élément de porte coulissante (33).

8. Système de porte coulissante selon l'une des revendications précédentes, dans lequel un palier (32) destiné au support de l'élément de porte coulissante (33) dans le rail (29) est monté entre le rail (29) et l'élément de porte coulissante (33).

9. Système de porte coulissante selon l'une des revendications précédentes, dans lequel l'amortisseur est un amortisseur pneumatique, avec
une chambre pneumatique (2, 30) avec une paroi mobile et
une ouverture à étranglement dans une paroi de la chambre pneumatique (2, 30), et un dispositif de soupape (6) avec une pièce de soupape (11) suspendue élastiquement, qui délimite l'ouverture à étranglement et agrandit l'ouverture à étranglement avec une pression croissante entre les côtés du dispositif de soupape (6).

10. Système de porte coulissante selon la revendication 9, dans lequel la pièce de soupape (11) est suspendue par une suspension élastomère (12) conçue d'une seule pièce avec la pièce de soupape (11), l'ouverture à étranglement étant agrandie avec une pression croissante, entre les côtés du dispositif de soupape (6), suite à une extension élastique de la suspension élastomère (12).

11. Système de porte coulissante selon la revendication 10, dans lequel la pièce de soupape (11) est conçue d'une seule pièce avec la suspension élastomère (12) et un support (8) entourant la suspension (12) sous forme fermée.

12. Système de porte coulissante selon l'une des revendications 9 à 11, dans lequel l'amortisseur est conçu pour amortir un mouvement dans une première direction, à l'aide de l'ouverture à étranglement, un mouvement dans la direction opposée étant moins ou n'étant pas amorti.
